# EUROPÄISCHE PATENTSCHRIFT

(11) **EP 1 757 637 B1**
(45) Veröffentlichungstag und Bekanntmachung des Hinweises auf die Patenterteilung: **12.12.2007**
(21) Anmeldenummer: 06016794.7
(22) Anmeldetag: 11.08.2006
(51) Int. Cl.: C08G 77/46, C08G 77/388, C08J 9/00

(54) **Verfahren zur Herstellung von SiOC-verknüpften, linearen Polydialkylsiloxan-Polyoxyalkylen-Blockcopolymeren**
Process for the preparation of SiOC-linked linear polydialkylsiloxane polyoxyalkylene block copolymers
Procédé de préparation de copolymères linéaires à liaison SiOC comprenant des blocs de polydialkylsiloxane et de polyoxyalkylène

(30) Priorität: 24.08.2005 DE 102005039931
(43) Veröffentlichungstag der Anmeldung: 28.02.2007
(73) Patentinhaber: Evonik Goldschmidt GmbH, 45127 Essen (DE)
(72) Erfinder: Knott, Wilfried, Dr., 45355 Essen (DE); Landers, Rüdiger, Dr., 45257 Essen (DE); Windbiel, Dagmar, 45289 Essen (DE)

(56) Entgegenhaltungen:
- US-A- 3 594 334
- US-A- 3 792 073
- US-A- 3 836 560
- DATABASE CA [Online] CHEMICAL ABSTRACTS SERVICE, COLUMBUS, OHIO, US; YAO, ZHANHAI ET AL: "Studies on poly(phenylene ether) and polydimethylsiloxane containing copolymer blends" XP002410494 gefunden im STN Database accession no. 1998:264218 & GAOFENZI CAILIAO KEXUE YU GONGCHENG , 14(2), 62-66 CODEN: GCKGEI; ISSN: 1000-7555, 1998,

## Beschreibung

Die Erfindung betrifft ein Verfahren zur Herstellung von SiOC-verknüpften, linearen (AB)_{d}-Siloxan-Polyoxyalkylen-Blockcopolymeren.

Diese Polyethersiloxane sind wertvolle grenzflächenaktive Additive zur Herstellung von Polyurethan-Schaumstoffen. Sie sind hochmolekulare lineare Siloxan-Polyoxyalkylen-Blockmischpolymere des Typs (AB)_{d} wobei d eine ganze Zahl ist, A ein Siloxanblock und B ein Polyoxyalkylenblock bedeuten.

Der Siloxanblock (A) der Mischpolymeren ist ein in der Hauptsache lineares Siloxanpolymer oder eine Kette mit sich wiederholenden Siloxaneinheiten (-R₂SiO-), was durch die Summenformel (-R₂SiO-)ₓ dargestellt werden kann.

Der Polyoxyalkylenblock (B) des linearen Blockmischpolymeren ist ein in der Hauptsache lineares Oxyalkylenpolymer enthaltend die sich wiederholenden Oxyalkyleneinheiten (-CₙH₂ₙO-)_{y}.

Die hochmolekularen linearen hydrolysierbaren (AB)_{d}-Siloxan-Polyoxyalkylen-Blockcopolymeren weisen die allgemeine Strukturformel [(R₂SiO)ₓ(CₙH₂ₙO)_{y}]_{d} auf, in der
- R: monovalente C₁- bis C₁₈-, vorzugsweise C₁- bis C₄-Kohlenwaserstoffreste sind, die innerhalb der einzelnen Siloxanblöcke oder auch in den einzelnen Blockeinheiten unterschiedlich sein können,
- n: eine Zahl von 2 bis 4, vorzugsweise 2 oder 3 darstellt,
- x: ≥ 5, vorzugsweise ≥ 10, insbesondere ≥ 14,
- y: ≥ 10, vorzugsweise ≥ 20, insbesondere ≥ 40,
- d: ≥ 3, vorzugsweise ≥ 5, ist.

Das mittlere Molekulargewicht jedes Siloxanblocks liegt zwischen ca. 350 bis 10.000 g/mol.

Das mittlere Molekulargewicht jedes Polyoxyalkylenblocks der erfindungsgemäß hergestellten Mischpolymeren liegt zwischen etwa 400 und 10.000 g/mol, vorzugsweise 1.000 bis 5.000 g/mol.

Die Größe der einzelnen Oxyalkyleneinheiten oder Siloxanblöcke ist nicht notwendigerweise einheitlich, sondern kann innerhalb der angegebenen Grenzen beliebig variieren.

Die einzelnen Polyoxyalkyleneinheiten sind Additionsprodukte aus mindestens einem Oxyalkylenmonomer, vorzugsweise Mischprodukte aus mindestens zwei Monomereinheiten, insbesondere aus Ethylenoxid und Propylenoxid.

Die bevorzugten Polyoxyalkylenblöcke bestehen im Wesentlichen aus Oxyethyleneinheiten oder Oxypropyleneinheiten, insbesondere gemischten Oxyethylen- und Oxypropyleneinheiten mit einem Oxyethylenanteil von etwa 30 bis 70 Gew.-% und 70 bis 30 Gew.-% Oxypropylenanteil, bezogen auf den Gesamtgehalt an Oxyalkyleneinheiten im Block.

Selbstverständlich müssen der Substituent R und die Indices n, x, y und d derart gewählt sein, dass in jedem bestimmten Blockmischpolymer die entsprechenden Mittelwerte für die SiloxanBlöcke, Polyoxyalkylen-Blöcke und das Mischpolymer selber erhalten werden.

Der Siloxanblockanteil beträgt im Copolymer zwischen 20 und 50 Gew.-% und der Anteil der Polyoxyalkylenblöcke zwischen 80 und 50 Gew.-% und das Blockcopolymer weist ein mittleres zahlengemitteltes Molekulargewicht Mn von mindestens 10.000 g/mol bis ca. 300.000 g/mol, vorzugsweise 15.000 g/mol bis ca. 50.000 g/mol auf. Die Ermittlung der mittleren Molmassen basiert dabei auf den bekannten Methoden der GPC-Analytik.

Diese Verbindungen, ihre Verwendung zur Herstellung von Polyurethanschäumen sowie ein Verfahren zu ihrer Herstellung wird in der US-3 836 560 beschrieben.

Die hydrolysierbaren, linearen (AB)_{d}-Siloxan-Polyoxyalkylenblock-Copolymeren werden durch eine Polykondensationsreaktion gemäß: ≡SiY + HOC≡ → ≡SiOC≡ + HY hergestellt, wobei Y eine Aminogruppe wie z.B. -NH₂, NHZ und NZ₂, in der Z ein einwertiger Kohlenwasserstoffrest sein kann. Vorzugsweise ist Y durch den Dimethylaminorest vertreten.

Die in hochsiedenden Solventien durchgeführte Kondensationsreaktion zu SiOC-verknüpften, linearen (AB)_{d}-Siloxan-Polyoxyalkylenblock-Copolymeren wird in dieser Schrift nur an Dimethylamino-substituierten Polydimethylsiloxanen offenbart, die durch den Einsatz von Dimethylamin als Ausgangsmaterial kostspielig im direkten Vergleich zu den Aminosiloxanen mit NH₂-Endgruppe als direkten Ammoniakderivaten sind.

Es wird auch empfohlen, die Reaktion in Abwesenheit eines Katalysators durchzuführen. Bei Zusatz von Kondensationskatalysatoren wie Carbonsäuren und/oder deren fluorierten Derivaten ist es wesentlich, diese nach Beendigung der Reaktion zu entfernen oder zu neutralisieren, da ansonsten keine stabilen (AB)_{d}-Blockcopolymere erhalten werden.

Vollzieht man die technische Lehre der US-3 836 560 unter Einsatz von NH₂-terminierten Polydimethylsiloxanen in der Kondensationsreaktion mit Polyetherdiolen nach, wird deutlich, dass diese Reaktion einen erheblichen Zeitbedarf zum Erreichen des angestrebten Molgewichtsaufbaus besitzt und dass sich selbst nach langen Reaktionszeiten der beabsichtigte Kondensationsgrad nicht reproduzierbar einstellen lässt. Als makroskopische Kenngröße für den Molekulargewichtsaufbau kann die dynamische Viskositätsmessung direkt nach der Umsetzung herangezogen werden.

Dieser offensichtliche Mangel verhindert, dass die unter Kostengesichtspunkten attraktiven Aminosiloxane mit NH₂-Endgruppen technisch sinnvoll zur Herstellung von hochmolekularen linearen hydrolysierbaren (AB)_{d}-Siloxan-Polyoxyalkylen-Blockcopolymeren der allgemeinen Strukturformel [(R₂SiO)ₓ(CₙH₂ₙO)_{y}]_{d} und der spezielleren Strukturformel [(CH₃)₂SiO)ₓ(CₙH₂ₙO)_{y}]_{d}, die nach der Lehre der US-3 947 386 zur Herstellung von Polyurethan-Formschäumen dienen, eingesetzt werden können.

Eine besonders empfindliche und aussagekräftige Bewertung des in der Kondensationsreaktion erreichten Verknüpfungsgrades und des erzielten Molmassenaufbaus solcher (AB)_{d}-Copolymerer ermöglicht der anwendungstechnische Test, bei dem das gewonnene Copolymer als Schaumstabilisator in Polyurethanformulierungen zur Herstellung von insbesondere Etherschäumen oder offenzelligen Hartschäumen eingebracht wird. Ein defizitärer Kondensationsgrad im (AB)_{d}-Schaumstabilisator gibt sich bei der Verschäumung in technisch unzureichendem Verhalten, als beispielsweise Schrumpf bzw. Kollaps zu erkennen.

Die erfindungsgemäß zu lösende Aufgabe bestand darin, ein technisch reproduzierbares Verfahren zur wirtschaftlich sinnvollen Nutzung auf Ammoniak basierender, im Wesentlichen primäre Aminogruppen aufweisender Aminosiloxane als Ausgangsmaterialien für die Herstellung von linearen, SiOC-verknüpften (AB)_{d}-Siloxan-Polyoxyalkylenblock-Copolymeren zu finden.

Dieses Verfahren soll in vertretbaren Reaktionszeiten die reproduzierbar kontrollierte Einstellung des Kondensationsgrades und damit des Molekulargewichtes des linearen, SiOC-verknüpften (AB)_{d}-Siloxan-Polyoxyalkylenblock-Copolymeren ermöglichen und damit insbesondere deren Nutzung als Stabilisatoren in Polyurethan-Etherschäumen erschließen.

Überraschenderweise wurde nun gefunden, dass sich die erfindungsgemäße Aufgabe dadurch lösen lässt, dass man der aus Aminosiloxan, Polyoxyalkylendiol und Solvens bestehenden Reaktionsmatrix bei erhöhten Temperaturen eine geringe Menge eines tertiären Amins wie z.B. aus der Reihe der aromatischen Amine (Pyridine, Pyrimidine, Pyridazin, Pyrazin, Chinolin, Imidazol, etc.) und/oder auch aus der Reihe der cycloaliphatischen Aminbasen (Chinuclidin, Diazabicyclo[2,2,2]octan, etc.) und hierbei insbesondere 1,8-Diazabicyclo[5,4,0]-undec-7-en hinzusetzt und die Polykondensationsreaktion unter Freisetzung von Ammoniak bis zum angestrebten Molekulargewichtsaufbau durchführt. Der Ammoniak kann indirekt in den Prozess zurückgeführt werden, indem er zur Herstellung der α,ω-Diaminosiloxane aus den entsprechenden α,ω-Dichlorsiloxanen dient.

Die Katalysatoren werden üblicherweise in Mengen von ca. 0,1 bis ca. 1,0, vorzugsweise 0,3 bis 0,7 Gew.-%, bezogen auf vorgelegtes Aminosiloxan und Polyether, eingesetzt.

Ein Gegenstand der vorliegenden Erfindung ist daher ein Verfahren zur Herstellung von SiOC-verknüpften, linearen (AB)_{d}-Siloxan-Polyoxyalkylen-Blockcopolymeren der allgemeinen Formel [(R₂SiO)ₓ(CₙH₂ₙO)y]_{d}, in der
- R: monovalente C₁- bis C₁₈-, vorzugsweise C₁- bis C₄-Kohlenwaserstoffreste sind,
- n: eine Zahl von 2 bis 4, vorzugsweise 2 oder 3 darstellt,
- x: ≥ 5, vorzugsweise ≥ 10, insbesondere ≥ 14,
- y: ≥ 10, vorzugsweise ≥ 20, insbesondere ≥ 40,
- d: ≥ 3, vorzugsweise ≥ 5 ist,
durch Umsetzung von primäre Aminogruppen aufweisenden Aminosiloxanen mit Polyoxyalkylendiolen, welches dadurch gekennzeichnet ist, dass als Katalysator ein oder mehrere tertiäre Amine mitverwendet werden.

Weitere Gegenstände der Erfindung sind durch die Ansprüche gekennzeichnet.

Die hydrolysierbaren, linearen (AB)_{d}-Siloxan-Polyoxyalkylenblock-Copolymeren werden durch eine Polykondensationsreaktion gemäß: ≡SiNH₂ + HOC≡ → ≡SiOC≡ + NH₃ erhalten.

Die Aminogruppen aufweisenden Aminosiloxane ≡SiNH₂ können durch Umsetzung von beispielsweise α,ω-Dichloropolydimethylsiloxanen Cl-(R₂SiO-)ₓ₋₁SiR₂-Cl mit Ammoniak nach an sich bekannten Verfahren hergestellt werden. Die Polyoxyalkylendiole sind Produkte, die durch Addition von Alkylenoxyden, insbesondere Ethylenoxyd und/oder Propylenoxyd an difunktionelle kurzkettige Alkohole nach an sich bekannten Verfahren hergestellt werden.

Um maximalen Polykondensationsgrad und Wirksamkeit zu gewährleisten, sollte man die Reaktionspartner exakt oder möglichst nahe exakt äquimolar anwenden, damit man die gewünschten möglichst hochmolekularen Polykondensate erhält. So wird auch bevorzugt, die difunktionellen Reaktionspartner Polysiloxan und Polyoxyalkylendiol in möglichst reiner Form einzusetzen, wobei die Anwesenheit von mono- und/oder trifunktionellen Komponenten in geringen Mengen bis ca. 3 % akzeptiert werden kann.

### Herstellungsbeispiele:

### Beispiel 1

### Herstellung eines (α,ω-Diaminosiloxans (nicht erfindungsgemäß) :

Ein α,ω-Dichlorpolydimethylsiloxan der mittleren Kettenlänge 15 wird als 25 %ige Lösung in Toluol vorgelegt und dann wird bei 25 °C NH₃ über einen Zeitraum von 1,5 h eingeleitet. Das ausgefallene Ammoniumchlorid wird durch Filtration abgetrennt und danach wird Toluol bei vermindertem Druck von ca. 1 mbar und bei Sumpftemperaturen ≤ 60°C abdestilliert.
Der Gesamt-Stickstoff des Aminosiloxans wird analytisch bestimmt und hierauf basierend das Molekulargewicht berechnet.

### Beispiel 2

### (erfindungsgemäß):

Das nach Beispiel 1 hergestellte α,ω-Aminosiloxan wird im äquimolaren Verhältnis gemeinsam mit einem Polyoxyalkylendiol des mittleren Molekulargewichts von 2.800 g/mol und einem Ethylenoxid/Propylenoxid-Verhältnis von ca. 1 : 1 vorgelegt und durch Zugabe eines linearen Alkylbenzols mit einem Siedebereich von ca. 280 bis 320°C als Lösungsmittel auf 50 % Reaktandkonzentration eingestellt. Nun wird eine Menge von 0,5 mol-% (bezogen auf vorgelegtes Aminosiloxan und Polyether) 1,8-Diazabicyclo-[5,4,0]-undec-7-en (DBU) hinzugegeben und der Ansatz wird auf 180°C erwärmt. Mittels einer Lanze wird N₂ als Strippgas durch die Reaktionsmischung über die gesamte Reaktionszeit von 6 bis 8 Stunden geleitet. Das Ende der Reaktion ist an einem deutlichen Viskositätsanstieg verbunden mit erheblicher Schaumbildung zu erkennen. Nach 8 Stunden beträgt die dynamische Viskosität des erhaltenen Reaktionsproduktes ca. 6.000 mPa*s.

### Beispiel 3

### (nicht erfindungsgemäß):

In Analogie zu Beispiel 2 wird das nach Beispiel 1 hergestellte α,ω-Aminosiloxan im äquimolaren Verhältnis gemeinsam mit einem Polyoxyalkylendiol des mittleren Molekulargewichts von 2.800 g/mol und einem Ethylenoxid/Propylenoxid-Verhältnis von ca. 1 : 1 vorgelegt und durch Zugabe eines linearen Alkylbenzols mit einem Siedebereich von ca. 280 bis 320°C als Lösungsmittel auf 50 % Reaktandkonzentration eingestellt. Der Reaktionsansatz wird für 6 bis 8 Stunden auf 180°C erwärmt und mittels einer Lanze wird N₂ als Strippgas durch die Reaktionsmischung über die gesamte Reaktionszeit von 6 bis 8 Stunden geleitet. Nach 8 Stunden hat das Reaktionsprodukt eine dynamische Viskosität von nur 851 mPa*s (25 °C) erreicht.

Ausprüfung des nach erfindungsgemäßen Verfahren gewonnenen Polydimethylsiloxan-Polyoxyalkylen-Blockcopolymeren als Schaumstabilisator:

Der anwendungstechnische Test bedient sich der typischen Formulierung eines Etherschaums, die sich wie folgt zusammensetzt:

| Gew.-Teile | Rezepturbestandteile |
|---|---|
| 0,07 | Kosmos^{®} 29 (Zinn(II)-2-ethylhexanoat) der Firma Goldschmidt GmbH |
| 30 | Polyol CP 3322 (marktübliches Polyol der Firma DOW) |
| 70 | Polyol CP 755 (marktübliches Polyol der Firma DOW) |
| 7 | Polyol CP 1421 (marktübliches Polyol der Firma DOW) |
| 1,95 | Wasser |
| 0,2 | Tegoamin^{®} BDE (Bis(dimethylaminoethyl)etherlösung) der Firma Goldschmidt GmbH |
| 0,3 | Tegoamin^{®} 33(Triethylendiaminlösung) |
| 0,2 | Tegoamin^{®} DMEA (Dimethylethanolaminlösung) |
| 1,2 | des zu testenden Schaumstabilisators |
| 40,3 | Toluylendiisocyanat (TDI 80) (entsprechend einem Index von 85). |

Durchführung der Ausprüfung der zu testenden Schaumstabilisatoren:

In einem Pappbecher werden der Zinnkatalysator Zinn(II)-2-ethylhexanoat, die drei Polyole, das Wasser und die drei Aminkatalysatoren vorgelegt und für 60 s mit einem Scheibenrührer bei 1.000 U/min vermischt. Anschließend wird das Isocyanat zugegeben und mit dem gleichen Rührer für 7 s bei 1.500 U/min eingearbeitet. Dabei beginnt die Mischung im Becher aufzuschäumen. Deshalb wird sie direkt nach dem Ende des Rührens in eine Verschäumungsbox gegossen. Diese hat eine Grundfläche von 17 x 17 cm und eine Höhe von 30 cm. Nach außen verhindert eine 5 cm dicke Isolierung aus PU-Schaum ein zu schnelles Abkühlen. Innen ist die Box mit einer Kunststofffolie ausgelegt, um den ausgehärteten Schaum anschließend entnehmen zu können. Der Schaum steigt nach dem Eingießen in der Verschäumungsbox auf. Im Idealfall bläst der Schaum bei Erreichen der maximalen Steighöhe ab und sackt dann leicht zurück. Dabei öffnet sich die Zellmembrane der Schaumbläschen und eine offenporige Zellstruktur des Schaumstoffs wird erhalten. Bei einer zu geringen Stabilisierungswirkung kollabiert der PU-Schaum vor Erreichen der maximalen Steighöhe. Im Falle einer zu starken Stabilisierung steigt der Schaum sehr lange und bläst nicht ab. Bedingt durch die dann sehr geschlossene Zellstruktur schrumpft der Schaum beim anschließenden Abkühlen durch die Volumenkontraktion des sich abkühlenden Gases.

Ergebnisse der Verschäumungen der Reaktionsprodukte der vorab genannten Ausführungsbeispiele:

### Beobachtung bei Beispiel 2:

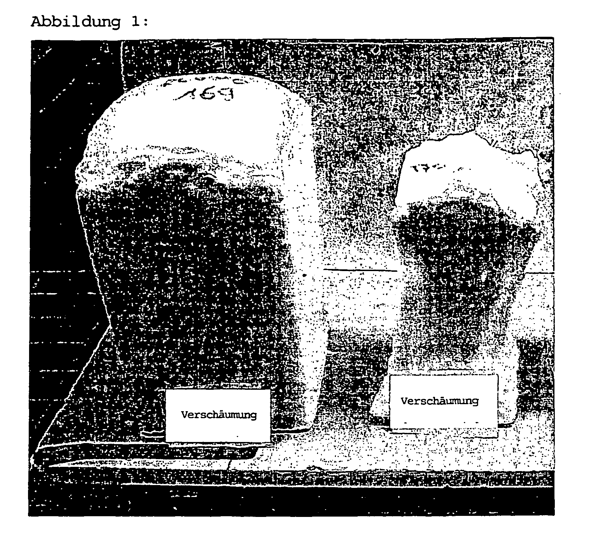

Der Schaum steigt auf, bläst nach ca. 2 min ab und verändert sich beim nachfolgenden Abkühlen nicht. Bei der nachfolgenden Untersuchung wird eine Zellzahl von 10 Zellen/cm und eine Porosität von 70 mm gemessen (Staudruckmessung, ermittelt wird die Höhe einer Wassersäule, die einen äquivalenten Druck erzeugt). Dies veranschaulicht eine ausreichend feine und offene Zellstruktur (von geschlossenen Schäumen spricht man ab etwa 300 mm Wassersäule). Der Schaum weist die gewünschten Etherschaum-Eigenschaften auf. Der Schaumstabilisator des Beispiels 2 ist für die Herstellung dieses Schaumtyps geeignet (Abbildung 1). Beobachtung bei Beispiel 3:

Der Schaum steigt auf und bläst nicht ab. Stattdessen steigt der Schaum lange nach (> 3 min). Beim nachfolgenden Abkühlen schrumpft der Schaum stark. Eine Messung der physikalischen Eigenschaften kann aufgrund des Schrumpfs nicht erfolgen. Der Schaumstabilisator dieses Beispiels ist für die Herstellung eines Etherschaumstoffs ungegeignet (Abbildung 1).

## Patentansprüche

1. Verfahren zur Herstellung von SiOC-verknüpften, linearen (AB)_{d}-Siloxan-Polyoxyalkylen-Blockcopolymeren der allgemeinen Formel [(R₂SiO)ₓ(CₙH₂ₙO)_{y}]_{d}, in der
R monovalente C₁- bis C₁₈-Kohlenwasserstoffreste sind,
n eine Zahl von 2 bis 4 darstellt,
x ≥ 5,
y ≥ 10,
d ≥ 3 ist,
durch Umsetzung von primäre Aminogruppen aufweisenden A-minosiloxanen mit Polyoxyalkylendiolen, **dadurch gekennzeichnet, das** als Katalysator ein oder mehrere tertiäre Amine mitverwendet werden.

2. Verfahren zur Herstellung von SiOC-verknüpften, linearen (AB)_{d}-Polydimethylsiloxan-Polyoxyalkylen-Blockcopolymeren gemäß Anspruch 1, **dadurch gekennzeichnet, dass** als Katalysator mindestens eine Verbindung ausgesucht aus der Gruppe der aromatischen Amine und der cycloaliphatischen Amine verwendet wird.

3. Verfahren zur Herstellung von SiOC-verknüpften, linearen (AB)_{d}-Polydimethylsiloxan-Polyoxyalkylen-Blockcopolymeren gemäß Anspruch 2, **dadurch gekennzeichnet, dass** als Katalysator mindestens ein Amin ausgesucht aus der Gruppe Pyridin, Pyrimidin, Pyridazin, Pyrazin, Chinolin, Imidazol, Chinuclidin, Diazabicyclo[2,2,2]octan), 1,8-Diazabicyclo-[5,4,0]-undec-7-en verwendet wird.

4. Verfahren zur Herstellung von SiOC-verknüpften, linearen (AB)_{d}-Polydimethylsiloxan-Polyoxyalkylen-Blockcopolymeren gemäß mindestens einem der Ansprüche 1 bis 3, **dadurch gekennzeichnet, dass** das mittlere Molekulargewicht jedes Siloxanblocks (-R₂SiO-)ₓ, mit R = CH₃- zwischen 500 bis 10.000 g/mol liegt.

5. Verfahren zur Herstellung von SiOC-verknüpften, linearen (AB)_{d}-Polydimethylsiloxan-Polyoxyalkylen-Blockcopolymeren gemäß mindestens einem der Ansprüche 1 bis 4, **dadurch gekennzeichnet, dass** das mittlere Molekulargewicht jedes Polyoxyalkylenblocks (-CₙH₂ₙO-)_{y} zwischen etwa 600 und 10.000 g/mol liegt.

6. Verfahren zur Herstellung von SiOC-verknüpften, linearen (AB)_{d}-Polydimethylsiloxan-Polyoxyalkylen-Blockcopolymeren gemäß mindestens einem der Ansprüche 1 bis 5, **dadurch gekennzeichnet, dass** das Blockcopolymer ein mittleres Molekulargewicht von 10.000 g/mol bis ca. 300.000 g/mol aufweist.

7. Verfahren zur Herstellung von SiOC-verknüpften, linearen (AB)_{d}-Polydimethylsiloxan-Polyoxyalkylen-Blockcopolymeren gemäß mindestens einem der Ansprüche 1 bis 6, **dadurch gekennzeichnet, dass** der Siloxanblockanteil im Copolymer zwischen 20 und 50 Gew.-% beträgt.

## Claims

1. Process for preparation of SiOC-linked, linear (AB)_{d} siloxane-polyoxyalkylene block copolymers of the general formula [(R₂SiO)ₓ(CₙH₂ₙO)_{y}]_{d}, in which
R are monovalent C₁-C₁₈ hydrocarbon radicals,
n is a number from 2 to 4,
x ≥ 5,
y ≥ 10,
d ≥ 3,
via reaction of aminosiloxanes having primary amino groups with polyoxyalkylenediols, **characterized in that** concomitant use is made of one or more tertiary amines as catalyst.

2. Process for preparation of SiOC-linked, linear (AB)_{d} polydimethylsiloxane-polyoxyalkylene block copolymers according to Claim 1, **characterized in that** at least one compound selected from the group of the aromatic amines and of the cycloaliphatic amines is used as catalyst.

3. Process for preparation of SiOC-linked, linear (AB)_{d} polydimethylsiloxane-polyoxyalkylene block copolymers according to Claim 2, **characterized in that** at least one amine selected from the group of pyridine, pyrimidine, pyridazine, pyrazine, quinoline, imidazole, quinuclidine, diazabicyclo[2.2.2]octane, 1,8-diazabicyclo[5.4.0]undec-7-ene is used as catalyst.

4. Process for preparation of SiOC-linked, linear (AB)_{d} polydimethylsiloxane-polyoxyalkylene block copolymers according to at least one of Claims 1 to 3, **characterized in that** the average molar mass of each siloxane block (-R₂SiO-)ₓ, where R = CH₃-, is from 500 to 10 000 g/mol.

5. Process for preparation of SiOC-linked, linear (AB)_{d} polydimethylsiloxane-polyoxyalkylene block copolymers according to any of Claims 1 to 4, **characterized in that** the average molar mass of each polyoxyalkylene block (-CₙH₂ₙO-)_{y} is from about 600 to 10 000 g/mol.

6. Process for preparation of SiOC-linked, linear (AB)_{d} polydimethylsiloxane-polyoxyalkylene block copolymers according to at least one of Claims 1 to 5, **characterized in that** the average molar mass of the block copolymer is from 10 000 g/mol to about 300 000 g/mol.

7. Process for preparation of SiOC-linked, linear (AB)_{d} polydimethylsiloxane-polyoxyalkylene block copolymers according to any of Claims 1 to 6, **characterized in that** the siloxane block content in the copolymer is from 20 to 50% by weight.

## Revendications

1. Procédé de fabrication de copolymères séquencés linéaires de siloxane-polyoxyalkylène de type (AB)_{d} et à liaison SiOC, de formule générale [(R₂SiO)ₓ(CₙH₂ₙO)_{y}]_{d}, dans laquelle :
R représente des radicaux monovalents d'hydrocarbures en C₁-C₁₈,
n est un nombre de 2 à 4,
x ≥ 5,
y ≥ 10, et
d ≥ 3,
en faisant réagir des aminosiloxanes présentant des groupements amino primaires avec des polyoxyalkylènediols, **caractérisé en ce que** l'on utilise conjointement une ou plusieurs amines tertiaires comme catalyseur.

2. Procédé de fabrication de copolymères séquencés linéaires de polydiméthylsiloxane-polyoxyalkylène de type (AB)_{d} et à liaison SiOC selon la revendication 1, **caractérisé en ce que** l'on utilise, comme catalyseur, au moins un composé choisi dans le groupe des amines aromatiques et des amines cycloaliphatiques.

3. Procédé de fabrication de copolymères séquencés linéaires de polydiméthylsiloxane-polyoxyalkylène de type (AB)_{d} et à liaison SiOC selon la revendication 2, **caractérisé en ce que** l'on utilise, comme catalyseur, au moins une amine choisie dans le groupe constitué de la pyridine, de la pyrimidine, de la pyridazine, de la pyrazine, de la quinoléine, de l'imidazole, de la quinuclidine, du diazabicyclo[2,2,2]octane et du 1,8-diazabicyclo-[5,4,0]-undéc-7-ène.

4. Procédé de fabrication de copolymères séquencés linéaires de polydiméthylsiloxane-polyoxyalkylène de type (AB)_{d} et à liaison SiOC selon au moins l'une quelconque des revendications 1 à 3, **caractérisé en ce que** le poids moléculaire moyen de chaque séquence de siloxane (-R₂SiO-)ₓ, avec R = CH₃-, se situe dans une plage de 500 à 10 000 g/mole.

5. Procédé de fabrication de copolymères séquencés linéaires de polydiméthylsiloxane-polyoxyalkylène de type (AB)_{d} et à liaison SiOC selon au moins l'une quelconque des revendications 1 à 4, **caractérisé en ce que** le poids moléculaire moyen de chaque séquence de polyoxyalkylène (-CₙH₂ₙO-)_{y} se situe dans une plage d'environ 600 à 10 000 g/mole.

6. Procédé de fabrication de copolymères séquencés linéaires de polydiméthylsiloxane-polyoxyalkylène de type (AB)_{d} et à liaison SiOC selon au moins l'une quelconque des revendications 1 à 5, **caractérisé en ce que** le copolymère séquencé présente un poids moléculaire moyen de 10 000 g/mole à environ 300 000 g/mole.

7. Procédé de fabrication de copolymères séquencés linéaires de polydiméthylsiloxane-polyoxyalkylène de type (AB)_{d} et à liaison SiOC selon au moins l'une quelconque des revendications 1 à 6, **caractérisé en ce que** la teneur en séquences de siloxane dans le copolymère se situe entre 20 et 50 % en poids.
